# EUROPÄISCHE PATENTSCHRIFT

(11) **EP 0 827 457 B1**
(45) Veröffentlichungstag und Bekanntmachung des Hinweises auf die Patenterteilung: **08.12.1999**
(21) Anmeldenummer: 97914275.9
(22) Anmeldetag: 20.03.1997
(51) Int. Cl.: B42D 15/00

(54) **DATENTRÄGER MIT OPTISCH VARIABLEM ELEMENT**
DATA CARRIER WITH AN OPTICALLY VARIABLE ELEMENT
SUPPORT DE DONNEES A ELEMENT OPTIQUEMENT VARIABLE

(30) Priorität: 22.03.1996 DE 19611383
(43) Veröffentlichungstag der Anmeldung: 11.03.1998
(73) Patentinhaber: Giesecke & Devrient GmbH, 81677 München (DE)
(72) Erfinder: KAULE, Wittich, D-82275 Emmering (DE); PLASCHKA, Reinhard, D-81475 München (DE)
(74) Vertreter: Klunker . Schmitt-Nilson . Hirsch
(86) Internationale Anmeldenummer: EP9701411
(87) Internationale Veröffentlichungsnummer: WO9735732

(56) Entgegenhaltungen:
- WO-A-94/11203

## Beschreibung

Die Erfindung betrifft einen Datenträger, insbesondere Banknote, Wertpapier, Ausweiskarte oder dergleichen, mit einem auf seiner Oberfläche angeordneten Sicherheitselement.

Zur Absicherung von Datenträgern, und hier insbesondere Wertdokumenten, werden dieses Dokumente oftmals mit zusätzlichen Sicherheitselementen versehen, die zum einen die Echtheit dieser Datenträger hervorheben und zum anderen als Schutz vor unerlaubter Reproduktion des Datenträgers dienen sollen. Neben einer Reihe von Elementen, die in separaten Druck- oder anderen Herstellungsprozessen hergestellt worden sind, haben in der letzten Zeit insbesondere optisch variable Elemente Verbreitung gefunden, die auf derartige Datenträger aufgebracht werden.

Zur Erkennung der Echtheit eines Dokumentes, welches ein Sicherheitselement in Form eines Reflexionshologramms, bestehend aus einer geprägten Lackschicht und einer reflektierenden Metallschicht, aufweist, wird beispielsweise in der WO 94/11203 vorgeschlagen, die Kleberschicht, mit der das optische Sicherheitselement auf das Dokument aufgebracht wird, mit einem Fluoreszenzstoff zu versehen. Dieser Fluoreszenzstoff kann zur Erkennung der Echtheit des Dokumentes zusammen mit dem optischen Sicherheitsmerkmal auf das Dokument übertragen werden. Dabei ist der Fluoreszenzstoff jedoch nur sichtbar, wenn in der Metallschicht des Elements Aussparungen vorgesehen sind, so daß der Fluoreszenzstoff durch die Aussparungen sichtbar ist. Alternativ hierzu wird in der WO 94/ 11203 vorgeschlagen, das Dokumentenmaterial transparent zu gestalten, so daß die Fluoreszenzstoff tragende Kleberschicht von der dem optischen Sicherheitselement abgewandten Seite her sichtbar wird.

Nachteilig an dem aus der WO 94/11203 bekannten fluoreszierenden Klebstoff ist, daß er nur bei Dokumenten bzw. optischen Sicherheitselementen angewendet werden kann, die spezielle auf den Klebstoff abgestimmte Randbedingungen erfüllen. Denn entweder muß das Dokumentenmaterial transparent sein oder das zu verwendende optische Sicherheitselement muß zumindest in Teilbereichen den Blick auf die darunterliegende, fluoreszierende Klebstoffschicht freigeben. Ferner könnte das Element abgelöst und auf ein gefälschtes Dokument aufgeklebt werden, ohne daß dieser Mißbrauch erkennbar wäre, da beim Ablösen ein Teil der fluoreszierenden Klebstoffschicht an dem Element haften bleibt und damit zwar aufgrund der geringeren Intensität ein quantitativ zu kleines Signal aber immer noch ein qualitativ richtiges Echtheitssignal liefert. Meist werden bei einer schnellen Prüfung von Echtheitselementen lediglich die qualitativen Eigenschaften, wie z. B. Vorhandensein einer Fluoreszenz oder deren Wellenlänge, ausgewertet, so daß die zu geringe Intensität des Signals nicht in die Entscheidung, ob ein Dokument echt ist oder nicht, einfließt.

Die Aufgabe der Erfindung besteht daher darin, ein Dokument mit einem Sicherheitselement vorzuschlagen, bei dem die Absicherung des Sicherheitselementes auf dem Dokument wirksam erfolgen kann, ohne daß dabei besondere Anforderungen an das Dokument oder das Sicherheitselement gestellt werden müßten.

Gelöst wird diese Aufgabe durch die in den unabhängigen Ansprüchen genannten Merkmale. Weiterbildungen sind Gegenstand der Unteransprüche.

Gemäß der Erfindung erfolgt die Absicherung eines Sicherheitselements durch eine besondere Vorbehandlung des Dokumentenmaterials im Bereich des aufzubringenden Elements. Auf diese Weise wird eine Beziehung zwischen Dokument und Element hergestellt, die es erlaubt, Fälschungsversuche zu verhindern oder zumindest leicht aufzudecken. In der einfachsten Ausführungsform erfolgt die Vorbehandlung durch Aufbringen einer Untergrundschicht, die mit visuell und/oder maschinell nachweisbaren Merkmalsstoffen versehen ist, wobei das Element so auf die Untergrundschicht aufgebracht wird, daß die Untergrundschicht zumindest in einem Teilbereich nicht von dem Element abgedeckt wird und somit von außen frei zugänglich ist. Auf diese Weise können die Merkmalsstoffe im unbedeckten Bereich der Untergrundschicht ungehindert nachgewiesen werden, ohne daß besondere Maßnahmen im Elementschichtaufbau oder besondere Dokumentenmaterialien nötig sind.

Darüber hinaus können die Merkmalstoffe Aufschluß über die Echtheit des Dokumentenmaterials geben, da sie nicht an das Element und dessen Schichtaufbau gebunden sind. Ist der Untergrundschicht beispielsweise ein Lumineszenzstoff beigemischt, so kann eine Fälschung aus kopiertem Dokumentenmaterial und echtem Element sehr leicht festgestellt werden, da die Fluoreszenzstoffe von einem Farbkopierer nicht oder zumindest nicht originalgetreu wiedergegeben werden können. Auf diese Weise ist es nicht nur möglich, Dokumente vor Fälschung oder Verfälschung besser zur schützen, sondern auch die Originalität von Produkten nachzuweisen und so die Produktsicherheit zu erhöhen.

Die maschinelle Prüfüng des Elements wird durch die erfindungsgemäße Kombination aus Vorbehandlung des Dokumentenmaterials und überlappender Aufbringung des Sicherheitselementes auf den vorbehandelten Bereich ebenfalls erleichtert. Über die mit einem maschinell nachweisbaren Merkmal versehene Untergrundschicht, kann der Bereich, in dem das Element angeordnet sein müßte, leicht lokalisiert werden. Handelt es sich bei dem Merkmal zusätzlich um ein Merkmal, welches durch das Element abgeschirmt wird, kann aus der flächigen Ausdehnung des Merkmalstoffs zugleich bestimmt werden, ob das Element vollständig fehlt oder eventuell stark beschädigt ist.

Auf diese Weise kann beispielsweise die Umlauffähigkeit einer mit einem Hologramm versehenen Banknote bestimmt werden. Enthält die Untergrundschicht z. B. einen Fluoreszenzstoff, dessen Anregung und Emission durch die im Hologrammschichtaufbau befindliche Metallschicht verhindert wird, so nimmt die Ausdehnung der fluoreszierenden Fläche zu, wenn Teile der Metallschicht und damit des Elementschichtaufbaus fehlen. Die Fluoreszenzstrahlung dringt auch durch Risse in der Metallschicht, so daß die im Elementbereich auftretende Fluoreszenz ein Maß für den Zustand des Elements und dessen optischen Effekts darstellt. Auch hierüber laßt sich ein Entscheidungskriterium für die Umlauffähigkeit der Banknote definieren.

Für den Fall, daß das Dokumentenmaterial aus Papier mit einer hohen Oberflächenrauhigkeit besteht, wie z. B. Banknotenpapier, wird das Element bevorzugt vollflächig mit der Untergrundschicht unterlegt, wobei die flächige Ausdehnung der Untergrundschicht zumindest in einer Richtung größer ist als das auf diese Fläche aufgebrachte optisch variable Element. Dadurch wird nicht nur ein zusätzlicher Fälschungsschutz für das Dokument erzeugt, sondern gleichzeitig werden durch die Oberflächenrauhigkeit hervorgerufene Störungen im optischen Eindruck des Elements vermieden. Wie bereits in der EP 0 440 045 A2 beschrieben, können die negativen Einflüsse der Oberflächenbeschaffenheit des Dokumentenmaterials durch bereichsweises mechanisches Glätten oder durch Aufbringen einer glättend wirkenden Untergrundschicht erfolgen.

Gemäß einer weiteren Ausführungsform kann die Untergrundschicht auch auf eine oder mehrere bereits auf dem Dokument vorhandene Schichten, z. B. Primerschichten aufgebracht werden. Sie kann zudem aus verschiedenen Zonen bestehen, welche unterschiedliche Merkmalsstoffe enthalten. Diese Zonen können sich auch überlappen, so daß z. B. bei Verwendung unterschiedlicher Lumineszenzstoffe Bereiche mit Mischlumineszenzen entstehen. Die Untergrundschicht kann entweder aufgerakelt, mittels Düsen aufgespritzt oder mit einem beliebigen Druckverfahren aufgedruckt werden.

Bei den zugesetzten Merkmalsstoffen handelt es sich bevorzugt um lumineszierende Pigmente. Sie besitzen den Vorteil, daß sie von einem Kopierer nicht oder nicht originalgetreu wiedergegeben werden können und daher ein sehr effektives Mittel darstellen, Fälschungen durch Farbkopiergeräte zu verhindern. Gleichzeitig können die lumineszierenden Pigmente auf einfache Weise mit Standarddetektoren nachgewiesen werden und so die Echtheit eines Dokuments belegen. Liegt die Emissionswellenlänge im sichtbaren Spektralbereich, können die lumineszierenden Pigmente auch als visuelles Echtheitsmerkmal dienen, das durch Beleuchten mit einer geeigneten Anregungsquelle schnell und problemlos nachgewiesen werden kann.

Es ist allerdings auch möglich, die Untergrundschicht mit anderen Echtheitsmerkmalen zu versehen. Hierbei kommen insbesondere metallische Pigmente, schwache Pastelltöne oder solche Pigmente in Betracht, die der Primerschicht eine Färbung verleihen, die sich nur geringfügig von der Farbe des Papieres abhebt. Ferner kommen auch magnetische, elektrisch leitfähige, radioaktive oder im sichtbaren oder unsichtbaren Spektralbereich absorbierende Substanzen sowie Interferenzschichtpigmente oder flüssigkristalline Pigmente in Betracht.

Weitere Ausführungsformen sowie Vorteile der Erfindung werden im folgenden anhand der Figuren erläutert, bei deren Darstellung zugunsten der Übersichtlichkeit auf eine maßstabsgetreue Wiedergabe verzichtet wurde.

Es zeigen im einzelnen:
- Fig. 1: einen Datenträger gemäß der Erfindung,
- Fig. 2: einen vergrößerten Ausschnitt aus dem erfindungsgemäßen Datenträger im Bereich des optisch variablen Elementes,
- Fig. 3: eine weitere Ausführungsform des erfindungsgemäßen Datenträgers in einer Ausschnittsvergrößerung im Bereich des optisch variablen Elementes,
- Fig. 4: den Ausschnitt aus einem erfindungsgemäßen Datenträger im Bereich eines aufgebrachten, optisch variablen Elementes,
- Fig. 5: eine weitere Ausführungsform des erfindungsgemäßen Datenträgers in einer Ausschnittsvergrößerung im Bereich des optisch variablen Elementes,
- Fig. 6: eine weitere Ausführungsform des erfindungsgemäßen Daten trägers im Bereich des Elements im Querschnitt.

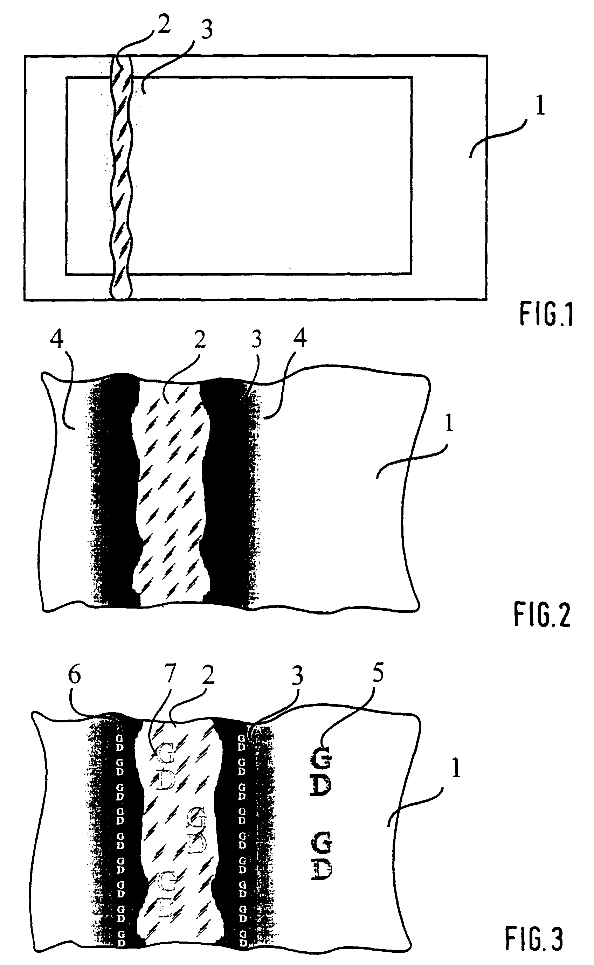

Fig. 1 zeigt einen Datenträger in Form einer Banknote 1, die einen optisch variablen Streifen 2 aufweist, der als Endloselement auf die Banknote aufgebracht ist. Als Datenträgermaterial kann Papier, ein Gewebe aus natürlichen und/ oder synthetischen Fasern oder auch eine Kunststoffolie verwendet werden. Dieser optisch variable Streifen 2 wurde auf einem Flächenbereich der Banknote aufgebracht, der im vorliegenden Fall von einer vollflächig unter dem optisch variablen Element liegenden Untergrundschicht 3 gebildet wird. Dieser Bereich ist mit einem Kopierer nicht wiederzugeben, da in die Untergrundschicht 3, welche bevorzugt aus einer Lackschicht besteht, lumineszierende Stoffe eingemischt wurden, die mit Hilfe der Kopiertechnik nicht auf die Kopie übertragen werden können und somit in der Kopie fehlen. Bei der Kontrolle der Echtheit der Banknote, beispielsweise mit Hilfe einer UV-Lampe oder mit Hilfe einer Echtheitssensorik, die den eingebrachten Lumineszenzstoff erkennen kann, kann das Fehlen dieses Merkmals sofort erkannt werden, selbst wenn der Versuch unternommen worden ist, das optisch variable Element 2 nachzubilden oder ein echtes Element 2 auf eine Kopie der Banknote 1 zu übertragen.

Statt der Zugabe von Lumineszenzstoffen, welche im sichtbaren und/ oder unsichtbaren Spektralbereich emittieren können, kann die Untergrundschicht auch mit anderen Stoffen angereichert werden, die eine originalgetreue Wiedergabe der Banknote mit Hilfe eines Kopierers verhindern. Hierunter fallen beispielsweise infrarotemittierende oder infrarotabsorbierende Pigmente. Des weiteren kommen auch magnetische oder leitfähige Substanzen in Betracht. Besonders geeignet sind auch thermochrome oder fotochrome Stoffe, sowie Substanzen, mit denen sich die Primerschicht radioaktiv markieren läßt.

Obwohl die Untergrundschicht an sich mit allen bekannten Verfahren aufgebracht werden kann, ist es besonders vorteilhaft, wenn sie mit Hilfe des Siebdruck-, Flexodruck- oder Rastertiefdruckverfahrens aufgebracht wird. Mit Hilfe dieser Technik lassen sich nämlich zum einen die Konturen der Untergrundschicht 3 sehr genau den gewünschten Erfordernissen anpassen.

Darüber hinaus kann die Untergrundschicht auch in einer Art und Weise aufgedruckt werden, daß sie einen zusätzlichen optischen Effekt verursacht.

In Fig. 2 ist hierzu ein Beispiel dargestellt, wobei lediglich ein Ausschnitt des erfindungsgemäßen Datenträgers 1 zu sehen ist. Das optisch variable Element 2 überdeckt dabei einen Bereich des Datenträgers 1, der vollflächig mit der Untergrundschicht 3 bedeckt ist. Zu den vom optisch variablen Element 2 wegweisenden Rändern 4 der Untergrundschicht 3 hin nimmt die pro Flächeneinheit aufgebrachte Menge an Untergrundschichtmaterial ab, so daß ein randabfallendes Verlaufsmuster entsteht. Im Siebdruck läßt sich dies recht einfach bewerkstelligen, wobei der Verlauf dabei als Punktrasterverlauf, Linienrasterverlauf oder Musterverlauf ausgestaltet werden kann, bei dem die Anzahl der pro Flächeneinheit aufgedruckten Muster zum Rand hin deutlich abnimmt. Die Abnahme der Untergrundschichtabdeckung kann hierbei kontinuierlich oder in Stufen erfolgen. Alternativ ist es auch möglich, die Menge an Untergrundschichtmaterial über den gesamten Bereich konstant zu halten und lediglich die Konzentration des Merkmalsstoffes zu variieren.

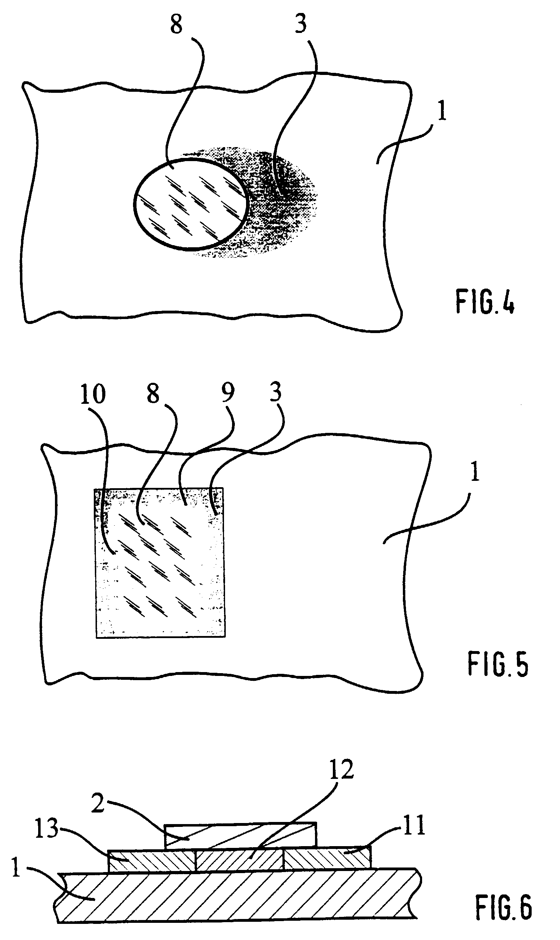

In Fig. 3 ist ein weiteres Ausführungsbeispiel des erfindungsgemäßen Datenträgers 1 in einer Ausschnittvergrößerung im Bereich des optisch variablen Elementes 2 dargestellt. Das optisch variable Element 2 ist hierbei wiederum ein holografischer Streifen, in welchem Informationen 7 in Form einer lichtbeugenden Reliefstruktur vorliegen, die zumindest unter einem Betrachtungswinkel sichtbar sind. Im vorliegenden Beispiel besteht die Information 7 aus den Buchstaben 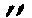 GD". Der holografische Streifen wurde wie im Beispiel der Fig. 4 auf eine Untergrundschicht 3 aufgebracht, die eine randabfallende Struktur aufweist. Dabei wurde die Untergrundschicht 3 jedoch so aufgedruckt, daß die in dem holografischen Streifen vorhandene Information 7 in der Untergrundschicht außerhalb des holografischen Streifens 2 nochmals erscheint.

Die Größe und Ausgestaltung dieser Informationen 6 ist dabei frei wählbar. In dem in der Fig. 3 dargestellten Beispiel wurden die Buchstaben 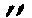 GD" in einem kleineren Format wiederholt. Die Anordnung und Form der Zeichen ist jedoch beliebig und kann den jeweiligen Bedürfnissen angepaßt werden. Diese Zeichen 6 können im Positiv- oder Negativverfahren in die Untergrundschicht 3 eingebracht werden. Beim Negativverfahren wird die Untergrundschicht 3 im Bereich der Zeichen 6 ausgespart, so daß an dieser Stelle die besondere physikalische Eigenschaft der Untergrundschicht 3 nicht erkennbar ist. Bevorzugt unterscheidet sich die Farbe der Untergrundschicht 3 im wesentlichen nicht von der Farbe der Oberfläche des Datenträgers. Sofern also in die Untergrundschicht 3 lumineszierende Stoffe eingemischt sind, macht sich dieses erst beim Betrachten der Schicht 3 unter einer anregenden Lichtquelle dadurch bemerkbar, daß im Bereich der Zeichen 6 die sonst vorhandene Lumineszenz fehlt und die Zeichen 6 somit vor einem lumineszierenden Hintergrund gut erkennbar sind.

Bei der positiven Darstellung der Zeichen 6 kann auf die Untergründschicht ein zusätzlicher Aufdruck aufgebracht werden. Bei dem Aufdruck kann es sich beispielsweise um eine zweite lumineszierende Farbe handeln, die sich von der Farbe des Untergrunds unterscheidet. Darüber hinaus sind jedoch auch andere Kombinationen möglich, bei denen beispielsweise der Aufdruck mit magnetischen oder anderen, bereits erwähnten, geeigneten Pigmenten oder Zusatzstoffen erfolgt. Ebenso können die Zeichen 6 mit einer transparenten oder opaken Farbe gedruckt werden, die den darunterliegenden Fluoreszenzstoff wenigstens teilweise abdeckt. Auf diese Weise ergeben sich für den Fachmann vielfältige Kombinationsmöglichkeiten, den Untergrund, auf den das optisch variable Element aufgebracht wird, zu gestalten und darüber hinaus mit einem weiteren, sicherheitstechnisch verwertbaren Aufdruck zu versehen. Die positive Darstellung der Zeichen 6 kann aber auch auf andere Weise erfolgen. So ist es denkbar die Untergrundschicht in einem beliebig geformten Bereich, z. B. in Form eines Rechtecks, auszusparen und in diesem freien Bereich die Zeichen 6 entweder mit dem gleichen Material wie die umgebende Untergrundschicht 3 oder aber einem anderen Mateial darzustellen.

Ein besonderer Vorteil der in Fig. 3 dargestellten Ausführungsform besteht darin, daß mit dieser Technik eine Informationskorrespondenz zwischen dem Datenträger 1 und dem auf dem Datenträger 1 aufgebrachten, optisch variablen Element 2 geschaffen werden kann, so daß die Identifikation des optisch variablen Elementes 2 mit dem Datenträger 1 möglich ist.

Hierzu kann z.B. die Information 7 in dem optisch variablen Element 2 auch mit einer weiteren, dieser entsprechenden Information 5, die auf dem Datenträger 1 an an sich beliebiger Stelle aufgebracht ist, in Korrespondenz gebracht werden. Besonders vorteilhafte Beispiele wären bei Banknoten etwa die Denomination, die ausgebende Stelle oder andere, einem bestimmten Wert einer Note zugeordnete grafische Elemente. Auch eine dreifache Wiederholung einer Information ist möglich, indem eine an anderer Stelle des Dokuments aufgebrachte Information 5, wie z. B. die Denomination, in der Untergrundschicht 3 und im Element wiederholt wird (Informationen 6, 7).

Gemäß einer weiteren Variante kann auch eine Korrespondenz zwischen einer in der Metallschicht des optisch variablen Elements 2 vorgesehenen, unter allen Betrachtungswinkeln sichtbaren Information und der zusätzlichen Information 6 in der Untergrundschicht 3 hergestellt werden. Die in der Metallschicht vorliegende, Information 7 kann z.B. durch Demetallisierung erzeugt werden, wobei die Informationen als Aussparungen dargestellt werden können oder auch als metallische Zeichen in einer demetallisierten Zone. Diese Informationen können nun in der Untergrundschicht 3 nochmals wiederholt werden.

Alternativ können die eingebrachten Informationen 6 und 7 bzw. die Information 6 und die Information 5 auf dem Datenträger so ausgeführt werden, daß sie sich zu einer Gesamtinformation ergänzen. Bei dem zuletzt genannten Ausführungsbeispiel kann die im Element 2 vorhandene Information 7 mit einbezogen werden. Hierzu kann die im Element 2 vorhandene Information eine oder mehrere der in der Metallschicht, der Untergrundschicht oder der auf dem Dokument vorhandenen Informationen oder die Gesamtinformation wiederholen oder ergänzen. Bei diesen Ausführungsformen werden hohe Anforderungen an die passergenaue Zuordnung zwischen Element 2 und Untergrundschicht 3 bzw. zwischen der Information 6 in der Untergrundschicht und der Information 5 auf dem Datenträger gestellt, die von einem Fälscher praktisch nicht erfüllt werden können.

Die zusätzlich auf die Untergrundschicht 3 aufgebrachte, bzw. in ihr ausgesparte Information 6 kann aber auch so ausgeführt werden, daß sie maschinell lesbar ist und gegebenenfalls auch eine Korrespondenz zu dem aufgebrachten optisch variablen Element 2 aufweist So können die Informationen 6 anstelle der in Fig. 3 dargestellten Buchstaben GD auch in Form von binären Codierungen oder anderweitigen maschinenlesbaren Zeichen aufgebracht werden. So könnte beispielsweise die auch in dem optisch variablen Element vorhandene Wertzahl der Banknote maschinenlesbar als Information 6 aufgebracht werden. Dabei stehen wiederum alle oben bereits beschriebenen Möglichkeiten zur Verfügung, mit denen die Zusatzinformation aufgebracht werden soll. Von besonderem Interesse ist hierbei jedoch eine magnetische Codierung, die beispielsweise als Strichcode sichtbar oder unsichtbar ausgeführt sein kann.

Neben den bislang beschriebenen optisch variablen Elementen, die in Form von Endlosstreifen zumeist mit Hilfe der Transfertechnik auf das Dokument übertragen werden, besteht auch die Möglichkeit, ein optisch variables Element als sogenanntes Einzelelement zu applizieren. Diese Elemente liegen auf dem Datenträger an einer geeigneten Stelle seiner Oberfläche, ohne daß sie zwei Ränder des Datenträgers verbinden. Hinsichtlich ihrer Form bestehen keine Beschränkungen. Insbesondere können diese Elemente aus geometrischen Grundstrukturen, wie Kreisen, Rechtecken, Vielecken, oder deren Kombinationen aufgebaut sein. Bevorzugt wird die Form der Untergrundschicht auf die Form des Elementes abgestimmt. In Fig. 4 ist hierzu ein Beispiel dargestellt, bei dem in einem Bereich des Datenträgers 1, der wiederum vergrößert dargestellt worden ist, ein optisch variables Einzelelement 8 in einen Teilbereich 3 des Datenträgers aufgebracht ist, der wiederum die gewünschten Eigenschaften aufweist. Je nach Form und Motiv des optisch variablen Elementes 8 kann der darunterliegende Bereich entsprechend den jeweiligen Erfordernissen in seiner Form und Größe angepaßt werden.

Das optisch variable Element kann auch direkt auf dem Dokument erzeugt werden. Im Fall eines Hologramms beispielsweise, indem eine lackbeschichtete Prägewalze mit dem Dokumentenmaterial in Kontakt gebracht und der Lack während des Kontakts gehärtet wird. Anschließend wird dieser Lack mit einer Metallschicht versehen. Die Metallschicht kann jedoch auch auf der Prägewalze erzeugt und zusammen mit der Lackschicht übertragen werden (EP 0 563 992 A2). Die Ränder des Bereiches, die dem optisch variablen Element abgewandt sind, können die gleiche Form haben, wie die Ränder des optisch variablen Elements oder entsprechend den jeweiligen Erfordernissen anders gestaltet sein. Außerdem kann die Randgestaltung des Elementes 2 oder 8 so ausgeführt sein, daß zusätzliche, schwer nachahmbare Effekte entstehen. Hierzu können die Ränder, wie in Fig. 5 in einigen Beispielen gezeigt, beispielsweise als Zacken 9 oder Muster 10 ausgeführt sein, die den Bereich 3 nur zum Teil abdecken.

Fig. 6 zeigt ein Ausführungsbeispiel, bei welchem die Untergrundschicht 3 aus mehreren Zonen 11, 12, 13 besteht. Die Zonen 11, 12, 13 unterscheiden sich in erster Linie hinsichtlich ihrer physikalischen Eigenschaften. So können in den verschiedenen Zonen 11, 12, 13 unterschiedliche Lumineszenzstoffe vorliegen, so daß beispielsweise die Zone 13 bei Anregung im roten Spektralbereich fluoresziert und die Zone 11 im grünen phosphoresziert. Nach dem Abschalten der Anregung bleibt in diesem Fall die grüne Emission der Zone 11 eine Zeit lang bestehen, während die Emission des Fluoreszenzstoffs in Zone 13 mit Abschalten der Anregung endet. Die mittlere Zone 12 kann nun einen weiteren Lumineszenzstoff oder einen anderen Merkmalstoff enthalten, der beispielsweise erst bei einem bestimmten Grad der Verschlissenheit des Elements 2 durch Bruchstellen in diesem nachweisbar wird. Die Zone 12 könnte auch frei von jeglichem Merkmalstoff sein, wenn dies sinnvoll erscheint. Ebenso könnten sich die verschiedenen Zonen 11, 12, 13 auch zumindest teilweise überlappen, um Mischeffekte zu erzeugen.

Ferner können unter der Untergrundschicht 3 weitere Schichten angeordnet sein. So wäre es beispielsweise denkbar, eine nicht mit Merkmalstoffen pigmentierte Primerschicht zur Glättung der Oberfläche auf das Dokument aufzubringen und nur in einem Kleinen Teilbereich die pigmentierte Untergrundschicht, so daß das anschließend aufgebrachte Element die Untergrundschicht zwar überlappt aber nicht vollständig auf dieser angeordnet ist.

Auch in den oben beschriebenen Beispielen ist es nicht notwendig, daß die Untergründschicht vollflächig unter dem Element angeordnet ist. Sie muß lediglich an mindestens einer Stelle frei zugänglich sein.

Neben Hologrammen können auch alle anderen optisch variablen Elemente eingesetzt werden, die zumindest bei zwei verschiedenen Betrachtungswinkeln einen unterschiedlichen optischen Eindruck vermitteln. So sind im Sinne dieser Erfindung auch optisch variable Tinten, optisch variable Dünnschichtfilme, Kinegramme, Pixelgramme, Stereogramme und andere Varianten von Hologrammen sowie Volumenhologramme, Iriodinaufdrucke oder Paliochrome sowie Metallfilme oder andere metallische Beschichtungen mit oder ohne Prägestrukturen einsetzbar. Ebenso sind bloße Prägungen des Substrates als optisch variable Elemente verwendbar, die zu einem optisch variablen Effekt führen. Auch der Einsatz von Metalleffektfarben oder polymeren Flüssigkristallfarben liegt im Bereich der erfindungsgemäßen Möglichkeiten.

Außerdem können auf einem erfindungsgemäßen Datenträger auch andere, d.h. nicht optisch variable Sicherheitselemente aufgebracht und durch das erfindungsgemäße Verfahren abgesichert werden.

Obwohl die Erfindung im wesentlichen anhand der Absicherung von Datenträgern, wie Wertdokumenten, beschrieben worden ist, eignen sich die erfindungsgemäßen, optisch variablen Sicherheitselemente auch zur Absicherung von Produkten, und hierbei insbesondere von Produkten, die einen hohen Wert darstellen. So kann das erfindungsgemäße Sicherheitselement beispielsweise auf Warenetiketten, CDs oder andere Verkaufsprodukte aufgebracht werden, deren Originalität mit Hilfe des erfindungsgemäßen Sicherheitselementes nachgewiesen werden kann. Dementsprechend sind im Sinne der Erfindung auch derartige Produkte als Datenträger anzusehen.

## Patentansprüche

1. Datenträger (1), insbesondere Banknote, Wertpapier, Ausweiskarte oder dergleichen, mit einem auf seiner Oberfläche angeordneten Sicherheitselement (2, 8), wobei der Datenträger (1) wenigstens in einem Teilbereich mit einer Untergrundschicht (3) versehen ist, welche wenigstens ein Echtheitsmerkmal aufweist, und das Sicherheitselement (2, 8) diese Untergrundschicht (3) zumindest teilweise überlappt, wobei die Untergrundschicht (3) so ausgebildet ist, daß sie zumindest in einer Richtung nicht vollständig von dem Element abgedeckt wird, und das Echtheitsmerkmal nach wie vor visuell und/oder maschinell nachweisbar ist.

2. Datenträger nach Anspruch 1, dadurch **gekennzeichnet,** daß das Sicherheitselement ein optisch variables Element ist, das bei Betrachtung unter wenigstens 2 verschiedenen Betrachtungswinkeln jeweils einen unterschiedlichen optischen Eindruck vermittelt.

3. Datenträger (1) nach Anspruch 1 oder 2, dadurch **gekennzeichnet,** daß das Element (2, 8) vollflächig im Bereich der Untergrundschicht (3) aufgebracht ist.

4. Datenträger (1) nach einem der Ansprüche 1 bis 3, dadurch **gekennzeichnet,** daß die Untergrundschicht (3) aus wenigstens zwei Zonen (11, 12, 13) mit unterschiedlichen physikalischen Eigenschaften besteht.

5. Datenträger (1) nach Anspruch 4, dadurch **gekennzeichnet,** daß sich die verschiedenen Zonen nebeneinander, übereinander oder sich teilweise überlappend angeordnet sind.

6. Datenträger (1) nach wenigstens einem der Ansprüche 1 bis 5, dadurch **gekennzeichnet,** daß unterhalb der Untergrundschicht (3) weitere Schichten angeordnet sind.

7. Datenträger (1) nach wenigstens einem der Ansprüche 1 bis 6, dadurch **gekennzeichnet,** daß die Untergrundschicht (3) wenigstens ein Echtheitsmerkmal aus der Gruppe der lumineszierenden, metallischen, magnetischen elektrisch leitfähigen Stoffe oder der optisch variablen Pigmente enthält.

8. Datenträger (1) nach wenigstens einem der Ansprüche 1 bis 7, dadurch **gekennzeichnet,** daß die Menge der Untergrundschicht (3) pro Flächeneinheit mit der Entfernung vom Element (2) abnimmt.

9. Datenträger (1) nach wenigstens einem der Ansprüche 1 bis 8, dadurch **gekennzeichnet,** daß die Konzentration des Echtheitsmerkmals pro Flächeneinheit mit der Entfernung vom Element (2) abnimmt.

10. Datenträger (1) nach wenigstens einem der Ansprüche 1 bis 9, dadurch **gekennzeichnet,** daß in der Untergrundschicht (3) visuell und/oder maschinell lesbare Informationen (6) vorliegen.

11. Datenträger (1) nach Anspruch 10, dadurch **gekennzeichnet,** daß die Informationen (6) inhaltsgleich zu einer oder mehreren Informationen (5, 7) auf dem Dokument (1) und/oder dem Sicherheitselement (2) sind.

12. Datenträger (1) nach Anspruch 10, dadurch **gekennzeichnet,** daß die Informationen (6) in der Untergrundschicht (3) eine oder mehrere Informationen (5, 7) auf dem Dokument (1) und/oder dem Sicherheitselement (2) inhaltlich ergänzen.

13. Datenträger (1) nach wenigstens einem der Ansprüche 10 bis 12, dadurch **gekennzeichnet,** daß die Informationen (6) in der Untergrundschicht (3) in Form einer Codierung vorliegen.

14. Verfahren zur Herstellung eines Datenträgers nach Anspruch 1 oder 2, wobei der Datenträger wenigstens in einem Teilbereich mit einer Untergrundschicht versehen wird, welche wenigstens ein Echtheitsmerkmal enthält, und das Sicherheitselement so auf diese Untergrundschicht aufgebracht wird, daß es diese zumindest teilweise überlappt aber nicht vollständig abdeckt, und das Echtheitsmerkmal nach wie vor visuell und/oder maschinell nachweisbar ist.

15. Verfahren nach Anspruch 14, dadurch **gekennzeichnet,** daß das Element vollflächig im Bereich der Untergrundschicht aufgebracht wird.

16. Verfahren nach Anspruch 14 oder 15, dadurch **gekennzeichnet,** daß die Untergrundschicht aus wenigstens zwei Zonen mit unterschiedlichen physikalischen Eigenschaften zusammengesetzt wird.

17. Verfahren nach Anspruch 16, dadurch **gekennzeichnet,** daß die verschiedenen Zonen übereinander, nebeneinander oder sich teilweise überlappend angeordnet werden.

18. Verfahren nach wenigstens einem der Ansprüche 14 bis 17, dadurch **gekennzeichnet,** daß die Untergrundschicht aufgedruckt oder aufgerakelt wird.

19. Verfahren nach Anspruch 18, dadurch **gekennzeichnet,** daß die Untergrundschicht im Sieb-, Flexo- oder Rastertiefdruck aufgebracht wird.

20. Verfahren nach wenigstens einem der Ansprüche 14 bis 19, dadurch **gekennzeichnet,** daß das Element im Transferverfahren auf den Datenträger aufgebracht wird.

21. Verfahren nach wenigstens einem der Ansprüche 14 bis 19, dadurch **gekennzeichnet,** daß das optisch variable Element auf dem Datenträger erzeugt wird, indem das Datenträgermaterial mit einer geprägten Lackschicht in Kontrakt gebracht wird und diese während des Kontakts ausgehärtet wird.

22. Verfahren nach wenigstens einem der Ansprüche 14 bis 19, dadurch **gekennzeichnet,** daß das optisch variable Element durch Aufdrucken einer optisch variablen Druckfarbe erzeugt wird.

23. Verfahren nach wenigstens einem der Ansprüche 14 bis 19, dadurch **gekennzeichnet,** daß das optisch variable Element durch Prägen des Datenträgers erzeugt wird.

24. Sicherheitspapier mit einem auf seiner Oberfläche angeordneten Sicherheitselement (2, 8), welches bei wenigstens zwei Betrachtungswinkeln einen jeweils unterschiedlichen optischen Eindruck vermittelt, wobei das Sicherheitspapier wenigstens in einem Teilbereich mit einer Untergrundschicht (3) versehen ist, welche wenigstens ein Echtheitsmerkmal aufweist, und das Sicherheitselement (2, 8) diese Untergrundschicht (3) zumindest teilweise überlappt, wobei die Untergrundschicht (3) so ausgeführt ist, daß sie zumindest in einer Richtung nicht vollständig von dem Element abgedeckt wird, und das Echtheitsmerkmal nach wie vor visuell und/oder maschinell nachweisbar ist.

## Claims

1. A data carrier (1), in particular bank note, paper of value, identity card or the like, having a security element (2, 8) disposed on the surface thereof, the data carrier (1) being provided at least in a partial area with a background layer (3) having at least one authenticity feature, and the security element (2, 8) at least partly overlapping said background layer (3), the background layer (3) being formed such that it is not covered completely by the element at least in one direction, and the authenticity feature still being visually and/or mechanically detectable.

2. The data carrier of claim 1, characterized in that the security element is an optically variable element which conveys different optical impressions when viewed from at least two different viewing angles.

3. The data carrier of claim 1 or 2, characterized in that the element (2, 8) is applied all over in the area of the background layer (3).

4. The data carrier (1) of any of claims 1 to 3, characterized in that the background layer (3) consists of at least two zones (11, 12, 13) with different physical properties.

5. The data carrier (1) of claim 4, characterized in that the different zones are disposed side by side, one over the other or partly overlapping each other.

6. The data carrier (1) of at least one of claims 1 to 5, characterized in that further layers are disposed below the background layer (3).

7. The data carrier of at least one of claims 1 to 6, characterized in that the background layer (3) contains at least one authenticity feature selected from the group of luminescent, metallic, magnetic, electrically conductive substances or optically variable pigments.

8. The data carrier of at least one of claims 1 to 7, characterized in that the quantity of the background layer (3) per surface unit decreases with the distance from the element (2).

9. The data carrier of at least one of claims 1 to 8, characterized in that the concentration of the authenticity feature per surface unit decreases with the distance from the element (2).

10. The data carrier of at least one of claims 1 to 9, characterized in that visually and/or mechanically readable information (6) is present in the background layer (3).

11. The data carrier of claim 10, characterized in that the information (6) is identical in content with one or more pieces of information (5, 7) on the document (1) and/or the security element (2).

12. The data carrier of claim 10, characterized in that the pieces of information (6) in the background layer (3) supplement in content one or more pieces of information (5, 7) on the document (1) and/or the security element (2).

13. The data carrier of at least one of claims 10 to 12, characterized in that the information (6) is present in the background layer (3) in the form of a coding.

14. A method for producing the data carrier of claim 1 or 2, the data carrier being provided at least in a partial area with a background layer containing at least one authenticity feature, and the security element being applied to said background layer such that it at least partly overlaps the latter but does not completely cover it, and the authenticity feature still being visually and/or mechanically detectable.

15. The method of claim 14, characterized in that the element is applied all over in the area of the background layer.

16. The method of claim 14 or 15, characterized in that the background layer is composed of at least two zones with different physical properties.

17. The method of claim 16, characterized in that the different zones are disposed one over the other, side by side or partly overlapping each other.

18. The method of at least one of claims 14 to 17, characterized in that the background layer is printed or doctored on.

19. The method of claim 18, characterized in that the background layer is applied by screen printing, flexography or halftone photogravure.

20. The method of at least one of claims 14 to 19, characterized in that the element is applied to the data carrier by the transfer method.

21. The method of at least one of claims 14 to 19, characterized in that the optically variable element is produced on the data carrier by bringing the data carrier material in contact with an embossed layer of lacquer and curing the latter during contact.

22. The method of at least one of claims 14 to 19, characterized in that the optically variable element is produced by printing an optically variable ink.

23. The method of at least one of claims 14 to 19, characterized in that the optically variable element is produced by embossing the data carrier.

24. An antifalsification paper having a security element (2, 8) disposed on the surface thereof which conveys different optical impressions from at least two viewing angles, the antifalsification paper being provided at least in a partial area with a background layer (3) having at least one authenticity feature, and the security element (2, 8) at least partly overlapping said background layer (3), the background layer (3) being executed such that it is not covered completely by the element at least in one direction, and the authenticity feature still being visually and/or mechanically detectable.

## Revendications

1. Support de données (1), en particulier billets de banques, papiers valeur, cartes d'identité ou analogue, avec un élément de sécurité (2, 8) disposé sur sa surface, le support de données (1) étant doté au moins dans une zone partielle d'une couche sous-jacente (3), qui présente au moins une caractéristique d'authenticité, et l'élément de sécurité (2, 8) chevauchant au moins cette couche sous-jacente (3), la couche sous-jacente (3) étant réalisée de manière à ce qu'elle ne soit pas complètement couverte par l'élément au moins dans une direction, et la caractéristique d'authenticité étant décelable, tout comme avant, visuellement et/ou de façon automatisée.

2. Support de données (1), caractérisé en ce que l'élément de sécurité est un élément optiquement variable qui, en observant sous au moins 2 angles d'observation différents, donne chaque fois une impression optique différente.

3. Support de données (1) selon la revendication 1 ou 2, caractérisé en ce que l'élément (2, 8) est appliqué sur toute la surface dans la zone de la couche sous-jacente (3).

4. Support de données (1) selon l'une des revendications 1 à 3, caractérisé en ce que la couche sous-jacente (3) est constituée d'au moins deux zones (11, 12, 13) ayant des propriétés physiques différentes.

5. Support de données (1) selon la revendication 4, caractérisé en ce que les différentes zones sont disposées les unes à côté des autres, les unes au-dessus des autres, ou bien se chevauchent partiellement.

6. Support de données (1) selon l'une des revendications 1 à 5, caractérisé en ce que d'autres couches sont disposées au-dessous de la couche sous-jacente (3).

7. Support de données (1) selon au moins l'une des revendications 1 à 6, caractérisé en ce que la couche sous-jacente (3) contient une caractéristique d'authenticité issue du groupe des substances luminescentes, métalliques, magnétiques, conductrices de l'électricité, ou bien des pigments optiquement variables.

8. Support de données (1) selon au moins l'une des revendications 1 à 7, caractérisé en ce que la quantité de couches sous-jacentes (3) par unité de surface va en diminuant avec l'éloignement vis-à-vis de l'élément (2).

9. Support de données (1) selon au moins l'une des revendications 1 à 8, caractérisé en ce que la concentration de la caractéristique d'authenticité par unité de surface va en diminuant avec l'éloignement vis-à-vis de l'élément (2).

10. Support de données (1) selon au moins l'une des revendications 1 à 9, caractérisé en ce que des informations (6) lisibles visuellement et/ou automatiquement sont présentes dans la couche sous-jacente (3).

11. Support de données (1) selon la revendication 10, caractérisé en ce que les informations (6) sont de contenu identique à une ou plusieurs informations (5, 7) appliquée(s) sur le document (1) et/ou l'élément de sécurité (2).

12. Support de données (1) selon la revendication 10, caractérisé en ce que les informations (6) placées dans la couche sous-jacente (3) complètent du point de vue du contenu une ou plusieurs informations (5, 7) placée(s) sur le document (1) et/ou sur l'élément de sécurité (2).

13. Support de données (1) selon au moins l'une des revendications 10 à 12, caractérisé en ce que les informations (6) sont présentes dans la couche sous-jacente (3) sous la forme d'un codage.

14. Procédé de fabrication d'un support de données selon la revendication 1 ou 2, le support de données étant doté au moins dans une zone partielle d'une couche sous-jacente, qui contient au moins une caractéristique d'authenticité, l'élément de sécurité étant appliqué sur cette couche sous-jacente de manière qu'elle chevauche au moins partiellement mais cependant pas complètement celle-ci, et la caractéristique d'authenticité étant décelable tout comme avant, visuellement et/ou automatiquement.

15. Procédé selon la revendication 14, caractérisé en ce que l'élément est appliqué sur toute la surface dans la zone de la couche sous-jacente.

16. Procédé selon la revendication 14 ou 15, caractérisé en ce que la couche sous-jacente est constituée d'au moins deux zones ayant des propriétés physiques différentes.

17. Procédé selon la revendication 16, caractérisé en ce que les différentes zones sont disposées les unes au-dessus des autres, les unes à côté des autres ou en se chevauchant partiellement.

18. Procédé selon au moins l'une des revendications 14 à 17, caractérisé en ce que la couche sous-jacente est imprimée ou appliquée par travail à la racle.

19. Procédé selon la revendication 18, caractérisé en ce que la couche sous-jacente est appliquée par une impression sérigraphique, flexographique ou héliographique tramée.

20. Procédé selon au moins l'une des revendications 14 à 19, caractérisé en ce que l'élément est appliqué par un procédé de transfert sur le support de données.

21. Procédé selon au moins l'une des revendications 14 à 19, caractérisé en ce que l'élément optiquement variable est généré sur le support de données en mettant en contact le matériau de support de données avec une couche de vernis façonnée et en durcissant celle-ci pendant le contact.

22. Procédé selon au moins l'une des revendications 14 à 19, caractérisé en ce que l'élément optiquement variable est généré par impression d'une encre optiquement variable.

23. Procédé selon au moins l'une des revendications 14 à 19, caractérisé en ce que l'élément optiquement variable est généré par matriçage du support de données.

24. Papier de sécurité avec un élément de sécurité (2, 8) disposé sur sa surface, qui pour au moins deux angles d'observation, détermine une impression optique chaque fois différente, le papier de sécurité étant doté dans une zone partielle d'une couche sous-jacente (3) qui présente au moins une caractéristique d'authenticité, et l'élément de sécurité (2, 8) chevauchant cette couche sous-jacente (3) au moins partiellement, la couche sous-jacente (3) étant réalisée de manière qu'elle soit recouverte complètement par l'élément au moins dans une direction, et la caractéristique d'authenticité étant décelable tout comme avant visuellement et/ou de façon automatisée.
